# EUROPEAN PATENT APPLICATION

(11) **EP 0 529 036 A1**
(43) Date of publication of application: **03.03.1993**
(21) Application number: 92906122.4
(22) Date of filing: 24.02.1992
(51) Int. Cl.: B29C 33/16, B23Q 1/28

(54) **MAGNETIC LOCKING DEVICE FOR SLIDES IN INJECTION MOLDS**

(30) Priority: 25.02.1991 ES 9100478
(71) Applicant: NAVARRA PRUNA, Alberto, E-08960 Sant-Just-Desvern (ES)
(72) Inventor: NAVARRA PRUNA, Alberto, E-08960 Sant-Just-Desvern (ES)
(74) Representative: Ferregüela Colon, Eduardo
(86) International application number: ES9200022
(87) International publication number: WO9214596

(57) **Abstract**

The improvements consist in using as blocking means for a slide (1), a plurality of permanent magnets (11) arranged in the dolly or sliding base (12) for said slide (1) so that said permanent magnets (11) appropriately fixe in their respective housings and in variable number and arrangement as a function of the characteristics of each slide (1) are capable of locking the slide (1) with respect to the corresponding support (5) when the guides (3) leave the orifices (2) of the slide during the mold opening operation, so that said orifices or housings (2) remain at the precise position required to receive said guides (3) when subsequently closing the mold. Said permanent magnets (11) may also be arranged, besides of placing them on the sliding base (12), on the side guides for the slide (1) and on the safety stop for said slide, in the case where such a stop exists.

## Description

### Object of the Invention

The present invention relates to a number of improvements made in the locking and sliding means for slides in injection moulds. These improvements provide a simpler, safer and cheaper solution than offered by the locking means used for such purpose up to date.

Although this description is directed exclusively to the field of slides in injection moulds, the improvements are applicable to locking means used in any other industrial area in which similar performances are required.

### Background of the Invention

In the preferred field of practical application of the invention, to be precise, in the injection mould field, as is known, slides moveable on a sliding base are used and engage with appropriate ways ensuring a perfectly controlled movement for them. In turn, the slides are provided with orifices which act as receivers for guides fixedly attached to the other mould part. Obviously, during the mould opening operations, the guides become totally disengaged from the said slides.

In accordance with the foregoing, the slides must move on the corresponding support when they are pulled by the stems or guides inserted in the orifices thereof, but nevertheless, they must remain perfectly stationary when said guides are disengaged, so as to hold the appropriate situation for receiving such guides again in the reverse operation. To this end, locking means which, while holding the slide still when disengaged from the guides, nevertheless allow it to slide when it is engaged by said guides, should be used.

Multiple solutions are known for providing said locking means, noteworthy among them being the provision of orifices in the slide sliding support base. Such holes have a threaded sector in which there are housed respective balls, urged by respective springs, which rest on bolts threaded into said orifices, so that the balls press against the slide base, acting as a brake therefor, but obviously as a controlled brake. This solution, apart from being very bulky, which often causes problems for mounting the mould in the injection machine, offers operational risks, particularly the risk of the screws slackening off and coming loose with time, with the braking system being inutilized.

Another solution is to use dogs with locking levers, but this solution is structurally complex and very expensive.

From a more general point of view, all the solutions adopted with regard to such locking means are based on the use of mechanical artifacts which are generally complex and unreliable, when not expensive.

### Description of the Invention

The improvements proposed by the invention solve the above problems to full satisfaction, by determining a structurally simple, fully operatively reliable solution, i.e., safe and effective and, furthermore, cheap.

To be more precise, such improvements consist of the use, as locking means, of permanent magnets, the characteristics, number and positioning of which will be variable, depending on the demands of each particular slide with regard to the braking features thereof.

Starting out from this basic idea, the magnets may be mounted in the slide support, i.e. under the lower base of the slide or moving member and/or in the lateral ways which, suitably fixedly attached to said support, suitably guide the slide in its movements along the support.

Likewise, permanent magnets may also be used in a safety stop abutted by the slide at the end of stroke, obviously in those moulds where such slides are aided by said stop.

The magnets will be located in housings operatively formed in the anvil or sliding base, either in blind holes closed towards the slide, or in through holes, in which they will be fixed with the aid of an antifriction adhesive. Nevertheless, any other solution for housing and fixing the said magnets may be used.

Where a plate provided with magnets is used as sliding base for the slide or moving member on the corresponding support, this plate will be preferably undersized in thickness to provide a certain clearance between it and the slide avoiding friction between these members and, otherwise, said plate will be made from a material having a minimum coefficient of friction, such as for example ground and hardened steel.

### Description of the Drawings

To complement the description being made and with a view to aiding in the intelligibility of the features of the invention, this description is accompanied, as an integral part thereof, by a set of drawings in which the following has been shown with an illustrative and non-limitative nature:
Figure 1: this a partial schematic of an injection mould at the level of one of the slides and provided with the improvements forming the object of the invention in the locking means thereof.
Figure 2: this shows a detail similar to that of Figure 1, but more restricted and corresponding to a slide, the base of which is provided with a safety stop.
Figure 3: this shows a detail in cross section of the unit shown in Figure 2.
Figure 4: this is a perspective view of the same unit of Figures 2 and 3.
Figure 5: this is a schematic plan view of various arrangement possibilities for the housings of the permanent magnets in the sliding base or anvil.
Figure 6: this is a perspective view of a detail of one of the lateral ways for the slide, associated with the support of the latter, when the permanent magnets are mounted in such ways.
Figure 7: this is a view of a sliding base for a slide with different solutions for the mounting and fixing of the magnets.
Figure 8: finally, this is a cross section view similar to that of Figure 3, but corresponding to a solution in which there is provided a small clearance between the slide and the magnetized plate to avoid direct contact between these members.

### A Preferred Embodiment of the Invention

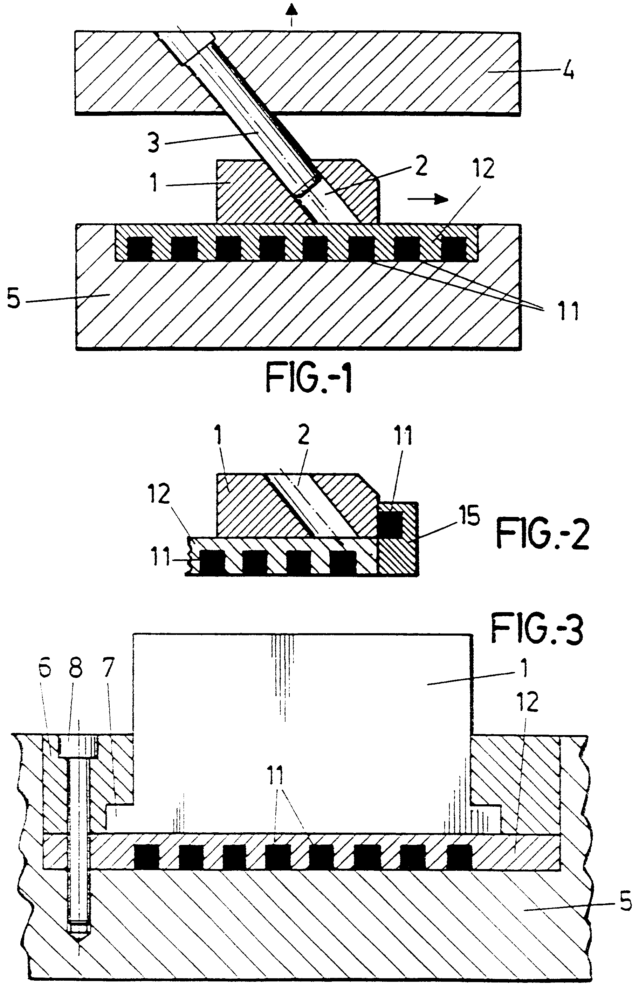

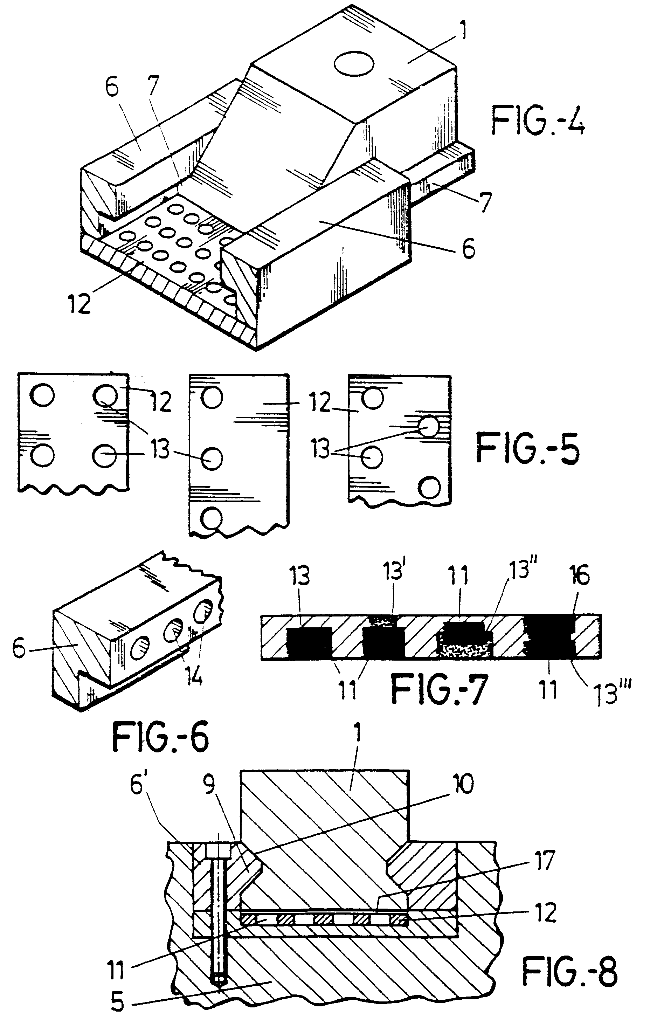

A portion of the injection mould has been shown schematically in Figure 1 in which one of the slides or moving members is referenced with (1), and with (2) the holes for the guides (3) associated with the body (4) of the mould. In this case the guides are oblique, but they could adopt any other configuration. (5) is the reference for the support to which the ways (6) on which the said slide (1) slides are fixed, said ways being shown in more detail in Figure 3 where there are also to be seen the longitudinal protuberances or ribs (7) of the slide (1) which engage in the said ways (6). The ways are attached to the support (5) by bolts (8), the shape of these ways (6) being a mere example of one embodiment and being variable practically without limit, such as for example is seen in Figure 8 where it is the ways (6') which are provided with longitudinal projections or ribs (9) which engage in channels (10) of the slide (1).

Thus, in any case, starting out from this basic conventional structure, the improvements of the invention are centered on the fact that a plurality of permanent magnets (11) are mounted as locking means for the slide (1) in the support (5) thereof. The magnets may be ceramic, ferritic, of neuminium, etc., such that these permanent magnets (11), due to the metallic nature of the slide (1), act permanently as a brake therefor, stabilizing it perfectly relative to the support (5) in the position in which the guides (3) come out of the housings (2) thereof. Thus, it is in a position to receive said guides (3) with complete accuracy during the opposite operative half cycle of the mould.

In accordance with one preferred embodiment of the invention, the magnets (11) are not mounted directly on the support (5), but on a sliding base (12) of bronze, brass, aluminium, graphite or other appropriate material.

As may be seen in Figure 5, housings (13) are formed in the sliding base (12), the number and arrangement of which may be variable depending on the practical requirements imposed in each case by the features of the slide (1).

Housings (14) may also be optionally formed for the said magnets (11) in the lateral ways (6) controlling the movement of the slide (1), as may be seen in Figure 6, and where the slide (1) is also provided with a safety stop (15), magnets (11) may also be mounted on the stop, to cooperate in better stabilization of the slide as may be seen in turn in Figure 2.

The said housings (13) and (14) for the magnets (11) may also be of variable shape and be provided with different means for attaching such magnets, as seen in turn in Figure 7, where at the lefthand side there is to be seen a blind housing (13), where the magnet (11) is a simple press fit. Alongside there is a stepped through hole (13') in which the magnet (11) is a simple press fit in the widest portion, followed by another blind hole (13'') in which the magnet is housed with a clearance, the hole being filled with an appropriate filling material. Finally there is a through hole (13''') where the magnet is initially fitted with a clearance but is fixed with an adhesive (16), preferably of antifriction type, or any other suitable adhesive.

The sliding base (12) will be attached to the support (5) with the same bolts (8) as fix the lateral ways (6), as seen in Figure 3, with independent bolts, in the case of non-ferrous moulds, preferably by the power of attraction derived from its magnets (11), in the case of ferrous moulds, or by any other means deemed desirable, and where the slide (1) slides directly on said sliding base (12), this will preferably be provided with a hard coating having a low coefficient of friction, such as for example a hardened ground steel coating, although optionally, in accordance with the embodiment of Figure 8, the base of the slide (1) may be spaced apart from the magnetized plate (12) by using a suitable guide system (9-10), there being formed between both members a clearance (17) which is sufficiently small for the magnets (11) not to lose effectiveness.

It is not deemed necessary to make this description more extensive for an expert in the art to understand the scope of the invention and the advantages derived therefrom.

The materials, shape, size and arrangement of the members will be susceptible of variation, provided that this does not mean any alteration of the essence of the invention.

The terms in which this specification has been described must always be understood in the broadest, non-limiting sense.

## Claims

1. Improvements in locking and sliding means for slides in injection moulds, characterized in that they consist of the arrangement, as such locking means, of permanent magnets (11) in number and arrangement appropriate for determining the locking of the slide (1) in any position thereof relative to the corresponding support (5), at the time when the corresponding ways (6) are disengaged from the holes (2) of said slide (1) during the mould opening operation.

2. Improvements in locking and sliding means for slides in injection moulds, according to claim 1, characterized in that the magnets (11), which may be ceramic, ferritic, of neuminium or any other appropriate type, are mounted on a sliding base (12) fixed to the slide support (5), with the same bolts (8) with which the longitudinal running ways (6) of such slide (1) are attached to said support (5), or with any other means, such as through the magnetic force of the magnets (11) themselves.

3. Improvements in locking and sliding means for slides in injection moulds, according to the foregoing claims, characterized in that optionally the permanent magnets (11) are mounted also on the inner surface of the longitudinal running ways (6) for said slide (1), and as the case may be on the front surface of a safety stop (15) for said slide (1), where such stop (15) is provided.

4. Improvements in locking and sliding means for slides in injection moulds, according to the previous claims, characterized in that the sliding base (12), which may be made of bronze, brass, aluminium, steel, graphite or other appropriate material, comprises housings (13) for the magnets (11) which may be blind or through housings and where said magnets (11) may be fixed by a simple press fit, with the aid of a antifriction adhesive (16) or by any other appropriate means.
